# EUROPÄISCHE PATENTSCHRIFT

(11) **EP 0 915 271 B1**
(45) Veröffentlichungstag und Bekanntmachung des Hinweises auf die Patenterteilung: **03.12.2003**
(21) Anmeldenummer: 98119046.5
(22) Anmeldetag: 08.10.1998
(51) Int. Cl.: F16J 15/08

(54) **Metallische Flachdichtung**
Metallic gasket
Joint plat métallique

(30) Priorität: 06.11.1997 DE 19749054
(43) Veröffentlichungstag der Anmeldung: 12.05.1999
(73) Patentinhaber: Federal-Mogul Sealing Systems GmbH, 57562 Herdorf (DE)
(72) Erfinder: Heilig, Markus, Dipl.-Ing., 57518 Betzdorf (DE)

(56) Entgegenhaltungen:
- EP-A- 0 465 268
- EP-A- 0 740 092
- DE-C- 4 305 974

## Beschreibung

Die Erfindung betrifft eine metallische Flachdichtung, insbesondere Zylinderkopfdichtung für Brennkraftmaschinen mit mehreren Brennkammern und Zylinderlaufbuchsen, bestehend aus einem dem Zylinderkopf zugeordneten ersten Deckblech mit ersten Vollsicken, die jeweils um eine Brennkammeröffnung verlaufen, wobei die Vollsicken benachbarter Brennkammeröffnungen im Teilungsbereich benachbarter Brennkammeröffnungen über Sickenknoten vereint und mittig über den Teilungsbereich geführt sind, einem dem Zylinderblock zugeordneten zweiten Deckblech mit zweiten Vollsicken, die ebenfalls jeweils um eine Brennkammeröffnung verlaufen, und einer zwischen dem ersten und zweiten Deckblech angeordneten Distanzplatte, welche den ersten Vollsicken zugeordnete Abstützmittel aufweist, wobei die ersten Vollsicken mit ihren Sickenspitzen, in axialer Richtung der Dichtung gesehen, außerhalb der Ebene der Abstützmittel angeordnet sind,

Bei thermisch hochbeanspruchten Brennkraftmaschinen treten zwischen Zylinderkopf und Zylinderblock große Wärmeausdehnungen auf. Auch bei Motoren, bei denen der Zylinderblock und der Zylinderkopf aus gleichen Materialien, z.B. aus Aluminium, bestehen, treten im Zylinderkopf höhere Temperaturen als im Zylinderblock auf, was dazu führt, dass die Zylinderköpfe sich stärker ausdehnen. Werden unterschiedliche Materialien verwendet, so ist die Relativbewegung noch größer. Bei einem Motorblock aus Gußeisen und einem Zylinderkopf aus Aluminium ist eine hohe Relativbewegung vorprogrammiert. Bei der Abdichtung des Fugenspaltes zwischen Zylinderkopf und Zylinderblock bei Brennkraftmaschinen mit eingesetzten Zylinderlaufbuchsen treten, insbesondere im Teilungsbereich benachbarter Brennkammeröffnungen, Probleme auf, da in diesem Bereich unterschiedliche Zylinderlaufbuchsenüberstände und gegebenenfalls ein Schlitz vorliegt. Überdies besteht das Problem, dass bei sehr schmalen Teilungsbereichen nicht mehr genügend Freiraum für die Abstützmittel der Sicken vorhanden ist, deshalb wurde bereits vorgeschlagen, die Abstützmittel im Teilungsbereich zu unterbrechen. Die DE 195 15 329 C1 offenbart eine solche gattungsgemäße Dichtung. Der mehrlagige Aufbau dieser Flachdichtung ist im wesentlichen symmetrisch aufgebaut, d. h. die Funktionselemente, wie Sicken und Abstützmittel, der dem Zylinderkopf und Zylinderblock zugeordneten Metalllagen weisen den gleichen konstruktiven Aufbau auf, so dass bei einem Motor mit Bauteilen aus verschiedenen Materialien keine optimale Abdichtung erzeugt werden kann.

Der Erfindung liegt die Aufgabe zugrunde, eine gattungsgemäße Flachdichtung dahingehend zu verbessern, dass die Funktionselemente individuell auf die unterschiedlichen Werkstoffe der abzudichtenden Bauteile abgestimmt sind, so dass eine verbesserte Abdichtung erzeugt wird.

Diese Aufgabe wird erfindungsgemäß durch die Merkmale des Patentanspruch 1 gelöst.
Vorteilhafte Ausgestaltungen der Erfindung sind in den Unteransprüchen offenbart.

Die erfindungsgemäße Flachdichtung weist einen vollkommen unsymmetrischen Aufbau auf. Während das dem Zylinderkopf zugeordnete Deckblech im Teilungsbereich nur eine Vollsicke, die mit Absttitzmitteln zusammenwirkt, angeordnet ist, weist das dem Zylinderblock zugeordnete Deckblech konzentrisch um jede Brennkammeröffnung sich erstreckende Sicken auf, wobei auf ein Abstützmittel verzichtet wurde. Durch die Anordnung eines Schlitzes im Teilungsbereich zwischen den Vollsicken ist eine Entkopplung der Sicken gegeben, wodurch eventuell vorhandene Laufbuchsenüberstände ausgeglichen werden können. Die Entkopplung kann sich innerhalb der Metalllagen fortsetzen, indem bei mehreren Lagen Schlitze eingebracht werden. Je nach Anwendungsfall kann es von Vorteil sein, die kopfseitige Deckblechlage aus einem anderen Werkstoff und in einer anderen Blechstärke auszuführen, wobei durch Reduzierung der Vollsickenhöhe eine Totaldeformation der Vollsicke erreichbar ist, ohne dass die Flächenpressung den maximal zulässigen Wert übersteigt.

Die Erfindung ist anhand von Ausführungsbeispielen in der Zeichnung dargestellt und wird im folgenden näher erläutert. Es zeigen:
- Fig. 1: Draufsicht einer erfindungsgemäßen Flachdichtung
- Fig. 2: Ansicht gemäß Schnittlinie I - I der Fig. 1
- Fig. 3: Ansicht einer alternativen Flachdichtung gem. Fig. 1

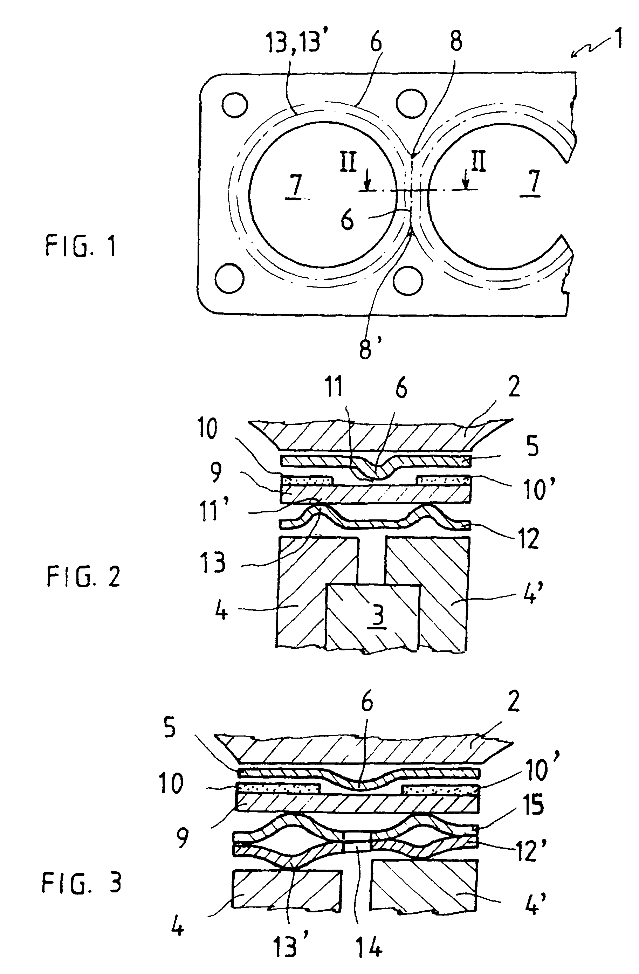

Die Fig. 1 zeigt eine metallische Flachdichtung (1) für die Abdichtung des Dichtspaltes zwischen einem Leichtmetallzylinderkopf (2), Fig. 2 und einem Zylinderblock (3) mit Zylinderlaufbuchsen (4, 4'). Die Flachdichtung besteht aus einem ersten Deckblech (5) mit einer Vollsicke (6), die im Teilungsbereich benachbarter Brennkammeröffnungen (7) über Sickenknoten (8, 8') vereint, mittig sich erstreckt und einer Distanzplatte (9), welche benachbart zu den Brennraumöffnungen (7), Abstützmittel (10) aufweist, die als Pressungsbegrenzer für die Vollsicke (6) fungiert. Die Sickenspitze (11) der Vollsicke (6) erstreckt sich außerhalb der Ebene oder des Bereichs der Abstützmittel (10), so daß die Sickenspitze (11) immer der Distanzplatte (9) zugekehrt ist. Dem Zylinderblock (3) ist ein zweites Deckblech (12, 12') zugeordnet. Dieses Deckblech weist konzentrisch um jede Brennkammeröffnung (7) sich erstreckende Vollsicken (13,13') auf. Die Sickenspitze (11') dieser Vollsicken (13,13') erstreckt sich in der Ebene der Abstützmittel (10). Aufgrund des schmalen Teilungsbereiches wurden die Vollsicken (13, 13') unmittelbar an den Rand der Brennkammeröffnungen (7) verlagert und es wurde auf Abstützmittel verzichtet. Auf diese Weise ist es möglich, die Flachdichtung optimal auf die Gegebenheiten der abzudichtenden Bauteile anzupassen. Da die Vollsicken (13) im Bereich der Laufbuchsen (4, 4') angeordnet sind, kann die Dichtpressung optimal eingeleitet werden. Zur besseren Anpassung bei unterschiedlichen Höhen der Laufbuchsen (4, 4') ist es von Vorteil, zwischen den Vollsicken (13, 13') einen Schlitz (14) zur Entkopplung der um jede Brennraumöffnung (7) sich erstreckenden Vollsicken anzuordnen (Fig. 3). Darüber hinaus können Zusatzplatten (15), die ebenfalls Sicken aufweisen und geschlitzt sein können, vorgesehen sein. Die erfindungsgemäße Flachdichtung unterliegt einem völlig neuen Auslegungsansatz. Die Funktionselemente, wie Vollsicken (6, 13, 13') und Abstützmittel (10) sind auf die motorspezifischen Gegebenheiten abgestimmt, so dass eine unsymmetrische Anordnung erzeugt wird.

## Patentansprüche

1. Metallische Flachdichtung, insbesondere Zylinderkopfdichtung für Brennkraftmaschinen mit mehreren Brennkammern und Zylinderlaufbuchsen, bestehend aus einem dem Zylinderkopf (2) zugeordneten ersten Deckblech (5) mit ersten Vollsicken (6), die jeweils um eine Brennkammeröffung (7) verlaufen, wobei die Vollsicken (6) benachbarter Brennkammeröffnungen (7) im Teilungsbereich benachbarter Brennkammeröffnungen (7) über Sickenknoten (8) vereint und mittig über den Teilungsbereich geführt sind, einem dem Zylinderblock (3) zugeordneten zweiten Deckblech (12,12') mit zweiten Vollsicken (13,13'), die ebenfalls jeweils um eine Brennkammeröffnung (7) verlaufen, und einer zwischen dem ersten und zweiten Deckblech angeordneten Distanzplatte (9), welche den ersten Vollsicken (6) zugeordnete Abstützmittel (10) aufweist, wobei die ersten Vollsicken (6) mit ihren Sickenspitzen (11), in axialer Richtung der Dichtung gesehen, außerhalb der Ebene der Abstützmittel (10) angeordnet sind, **dadurch gekennzeichnet, daß** sich die Abstützmittel (10) benachbart zur jeweiligen Brennkammeröffnung (7) angeordnet erstrecken, und sich die zweiten Vollsicken (13, 13') konzentrisch um die jeweilige Brennkammeröffnung (7) erstrecken und ihre Sickenspitzen (11'), in axialer Richtung der Dichtung gesehen, innerhalb der Ebene der Abstützmittel (10) verlaufen.

2. Metallische Flachdichtung nach dem Anspruch 1, **dadurch gekennzeichnet, daß** das dem Zylinderblock (3) zugewandte Deckblech (12, 12') einen Schlitz (14) aufweist, der sich nur im Teilungsbereich erstreckt und der in der Ebene der Sickenspitze (11) des ersten Deckbleches (5) verläuft.

3. Metallische Flachdichtung nach den Ansprüchen 1 und 2, **dadurch gekennzeichnet, daß** das erste und zweite Deckblech (5, 12, 12') aus verschiedenen Werkstoffen gebildet ist.

4. Metallische Flachdichtung nach den Ansprüchen 1 bis 3, **dadurch gekennzeichnet, daß** die Vollsicken (6, 13, 13') des ersten und zweiten Deckbleches (5, 12, 12') unterschiedliche Höhen aufweisen.

5. Metallische Flachdichtung nach den Anspürchen 1 bis 4, **dadurch gekennzeichnet, daß** die Blechstärken des ersten und zweiten Deckbleches (5, 12, 12') unterschiedlich ausgebildet sind.

6. Metallische Flachdichtung nach den Ansprüchen 1 bis 5, **dadurch gekennzeichnet, daß** zwischen dem zweiten Deckblech (12, 12') und der Distanzplatte (9) eine Zusatzplatte (15) mit Vollsicken angeordnet ist, deren Sickenspitzen entgegengesetzt der Vollsicken (13, 13') des Deckbleches (12, 12') sich erstrecken.

7. Metallische Flachdichtung nach Anspruch 6, **dadurch gekennzeichnet, daß** die Zusatzplatte (15) einen Schlitz (14') aufweist, der mit dem Schlitz (14) des zweiten Deckbleches (12, 12') deckungsgleich ist.

## Claims

1. Metallic flat gasket, in particular a cylinder head gasket for internal combustion engines with a plurality of combustion chambers and cylinder liners, comprising a first cover sheet (5) assigned to the cylinder head (2) with first full beads (6) which extend respectively around a combustion chamber opening (7), the full beads (6) of adjacent combustion chamber openings (7) being united in the separating region of adjacent combustion chamber openings (7) via bead nodes (8) and being guided centrally across the separating region, a second cover sheet (12, 12') assigned to the cylinder block (3) with two full beads (13, 13') which likewise extend respectively around a combustion chamber opening (7), and a distance plate (9) which is disposed between the first and second cover sheet and has support means (10) assigned to the first full beads (6), the first full beads (6) with their bead peaks (11), seen in the axial direction of the gasket, being disposed outwith the plane of the support means (10), **characterised in that** the support means (10) extend disposed adjacently to the respective combustion chamber opening (7) and the second full beads (13, 13') extend concentrically around the respective combustion chamber opening (7) and their bead peaks (11'), seen in the axial direction of the gasket, extend within the plane of the support means (10).

2. Metallic flat gasket according to claim 1, **characterised in that** the cover sheet (12, 12') which is orientated towards the cylinder block (3) has a slot (14) which extends only in the separating region and extends in the plane of the bead peak (11) of the first cover sheet (5).

3. Metallic flat gasket according to claims 1 and 2, **characterised in that** the first and second cover sheet (5, 12, 12') is formed from different materials.

4. Metallic flat gasket according to claims 1 to 3, **characterised in that** the full beads (6, 13, 13') of the first and second cover sheet (5, 12, 12') have different heights.

5. Metallic flat gasket according to claims 1 to 4, **characterised in that** the sheet thicknesses of the first and second cover sheet (5, 12, 12') are formed so as to be different.

6. Metallic flat gasket according to claims 1 to 5, **characterised in that**, between the second cover sheet (12, 12') and the distance plate (9), an additional plate (15) with full beads is disposed, the bead peaks of which extend opposite the full beads (13, 13') of the cover sheet (12, 12').

7. Metallic flat gasket according to claim 6, **characterised in that** the additional plate (15) has a slot (14') which is congruent with the slot (14) of the second cover sheet (12, 12').

## Revendications

1. Joint d'étanchéité plat métallique, plus particulièrement un joint d'étanchéité pour tête de cylindre pour des moteurs à combustion interne comportant plusieurs chambres de combustion et plusieurs chemises de cylindres, constitué d'une première tôle de recouvrement (5) avec des premières moulures complètes (6), correspondant à la tête du cylindre (2), qui font le tour de l'ouverture d'une chambre de combustion (7), moyennant quoi les moulures complètes (6) d'ouvertures de chambres de combustion (7) adjacentes sont réunies, au niveau de la zone de séparation des ouvertures de chambres de combustion (7), par des noeuds de moulures (8) et sont centrées sur la zone de séparation, d'une deuxième tôle de recouvrement (12, 12') correspondant au bloc-cylindre (3) avec des deuxièmes moulures complètes (13, 13') qui font également le tour d'une ouverture de chambre de combustion (7), et d'une plaque d'écartement (9), disposée entre la première et la deuxième tôle de recouvrement, qui comporte des supports (10) correspondant aux premières moulures complètes (6), moyennant quoi les crêtes (11) des premières moulures complètes (6) sont disposées en dehors du plan des supports (10), vues dans la direction axiale du joint d'étanchéité, **caractérisé en ce que** les supports (10) s'étendent à proximité de chaque ouverture de chambre de combustion (7), et les deuxièmes moulures complètes (13, 13') sont concentriques par rapport à chaque ouverture de chambre de combustion (7) et leurs crêtes (11') se trouvent dans le plan des supports (10), vues dans la direction axiale du joint d'étanchéité.

2. Joint d'étanchéité plat métallique selon la revendication 1, **caractérisé en ce que** la tôle de recouvrement (12, 12') orientée vers le bloc-cylindre (3) comporte une fente (14) qui ne s'étend que dans la zone de séparation et dans le plan de la crête des moulures (11) de la première tôle de recouvrement (5).

3. Joint d'étanchéité plat métallique selon les revendications 1 et 2, **caractérisé en ce que** la première et la deuxième tôle de recouvrement (5, 12, 12') est constituée de différents matériaux.

4. Joint d'étanchéité plat métallique selon les revendication 1 à 3, **caractérisé en ce que** les moulures complètes (6, 13, 13') de la première et de la deuxième tôle de recouvrement (5, 12, 12') ont des hauteurs différentes.

5. Joint d'étanchéité plat métallique selon les revendications 1 à 4, **caractérisé en ce que** les épaisseurs de la première et de la deuxième tôle de recouvrement (5, 12, 12') sont différentes.

6. Joint d'étanchéité plat métallique selon les revendications 1 à 5, **caractérisé en ce qu'**entre la deuxième tôle de recouvrement (12, 12') et la plaque d'écartement (9), se trouve une plaque supplémentaire (15) avec des moulures complètes dont les crêtes s'étendent dans le sens inverse des moulures complètes (13, 13') de la tôle de recouvrement (12, 12').

7. Joint d'étanchéité plat métallique selon la revendication 6, **caractérisé en ce que** la plaque supplémentaire (15) comporte une fente (14') qui coïncide avec la fente (14) de la deuxième tôle de recouvrement (12, 12').
